Europäisches Patentamt

European Patent Office

Office européen des brevets

(19)

(11) Publication number: **0 121 853**
**A2**

(12) # EUROPEAN PATENT APPLICATION

(21) Application number: **84103327.7**

(22) Date of filing: **27.03.84**

(51) Int. Cl.³: **G 06 F 13/00**

(30) Priority: **04.04.83 US 481990**

(43) Date of publication of application: **17.10.84**
**Bulletin 84/42**

(84) Designated Contracting States: **AT BE DE FR GB IT NL SE**

(71) Applicant: **BURROUGHS CORPORATION (a Michigan corporation), Burroughs Place, Detroit, Michigan 48232 (US)**

(72) Inventor: **Schnapp, Russell Lawrence, 8062 Gold Coast Drive, San Diego, Calif. 92126 (US)**

(74) Representative: **Eisenführ & Speiser, Martinistrasse 24, D-2800 Bremen 1 (DE)**

(54) **Data processing system having public encryption and private decryption keys.**

(57) A data processing system that provides for the public encryption of software programs while simultaneously protecting against the public decryption and piracy of those programs is comprised of a plurality of microprocessors; each microprocessor has a unique and publicly accessible encryption key for encrypting software programs in a unique fashion for that microprocessor; each microprocessor further has a unique decryption key for decrypting programs that have been encrypted with the microprocessor's unique encryption key; the decryption key in each microprocessor is imbedded therein in a fashion which makes the decryption key humanly imperceptible, and is of a type that is not determinable from the publicly accessible encryption key.

EP 0 121 853 A2

-1-

## DATA PROCESSING SYSTEM HAVING
## PUBLIC ENCRYPTION AND PRIVATE DECRYPTION KEYS

BACKGROUND OF THE INVENTION

This invention relates to data processing systems that protect against software piracy; and more particularly it relates to data processing systems that execute software programs which are encrypted.

Generally, data processing systems execute software programs that are merely written in a standard language such as FORTRAN, ALGOL, or COBOL. And, since standard language programs can be executed on a wide range of computers, they also are subject to piracy.

But software programs often are highly sophisticated and represent a large investment in time and money by a software vendor. Consequently, it is very desirable that some means be provided to adequately protect such investment from unscrupulous software pirates.

In the prior art, various data processing systems have been proposed which protect against software piracy. See, for example, the "magnetic watermark" system, the "hard node" system, and the "Johnstone" system as described at column 1, line 65 through column 2, line 33 of U.S. Patent 4,278,837 by R. Best, issued July 14, 1981. But all of those systems have deficiencies that are overcome by the system which the Best patent teaches.

Even so, the Best system also has its own serious deficiencies. For example, the owner of a microprocessor in the Best system is not able to write any of his own software. Also, the microprocessor owner cannot purchase any of his software from a third party software vendor. Instead, he must purchase all of his software from the microprocessor manufacturer.

Such deficiencies occur in the Best system because the enciphering key for each microprocessor is secretly known by only by the microprocessor manufacturer. This secret encryption key is then used by the microprocessor manufacturer to encrypt and load programs into the computer before the computer is distributed to the computer purchaser. See column 4, lines 57-69.

But highly sophisticated and special purpose software programs often are available from only a single software vendor. Also, software programs may be available from both a microcomputer manufacturer and a third party vendor but at different prices. Further, a microprocessor owner may desire to develop his own secret programs and not merely use someone else's software.

Presumably, if the owner of a Best microprocessor wished to write some of his own software or purchase some software from a third party vendor, the microprocessor manufacturer could make the appropriate key available to the software writer. However, special security precautions would have to be taken to ensure that the key is not stolen by a software pirate during transit from the microprocessor manufacturer to the software writer. For example, a key courier could be used; but that adds to the cost of the system. .

Special security precautions would also have to be taken to ensure that the intended recipient of the key did not make improper use of it. But that would be nearly impossible to achieve since in the Best system the enciphering key is identical to the deciphering key. See column 14, lines 22-55.

In other words, the owner of the Best system who is given a cipher key for the purposes of writing some of his own software also would be given the inherent capability of deciphering encrypted software. Thus, he could decipher the software which was written by the microprocessor manufacturer and supplied with the microprocessor. Such deciphered software could then be distributed by the microprocessor owner as a software pirate.

Accordingly, a primary object of the invention is to provide a data processing system that protects against software piracy in an improved fashion.

Another object of the invention is to provide a data processing system in which the microprocessor manufacturer as well as the microprocessor owner and third party software vendors can write and encrypt programs for the microprocessor without the above-described software piracy problems.

## BRIEF SUMMARY OF THE INVENTION

In one embodiment of the invention, these and other objectives are achieved by a data processing system that provides for the public encryption of software programs while simultaneously protecting against the public decryption and piracy of said programs. This system is comprised of a plurality of microprocessors; each microprocessor of the plurality has a unique and publicly accessible encryption key for encrypting software programs in a unique fashion for each particular microprocessor; each microprocessor of the plurality further has a unique decryption key for decrypting software programs that have been encrypted with the microprocessor's unique encryption key; the decryption key in each microprocessor is imbedded therein in a fashion which makes the decryption key humanly imperceptible, and is of a type that is not determinable for the publicly accessible encryption key.

BRIEF DESCRIPTION OF THE DRAWINGS

Various features and advantages of the invention are described in detail in the following Detailed Description in conjunction with the accompanying drawings wherein:

Figure 1 illustrates one preferred embodiment of a data processing system that is constructed according to the invention;

Figure 2 is a timing diagram illustrating the operation of a microprocessor in Figure 1 system; and

Figure 3 is a detailed logic diagram of a microprocessor in the Figure 1 system.

DETAILED DESCRIPTION OF THE INVENTION

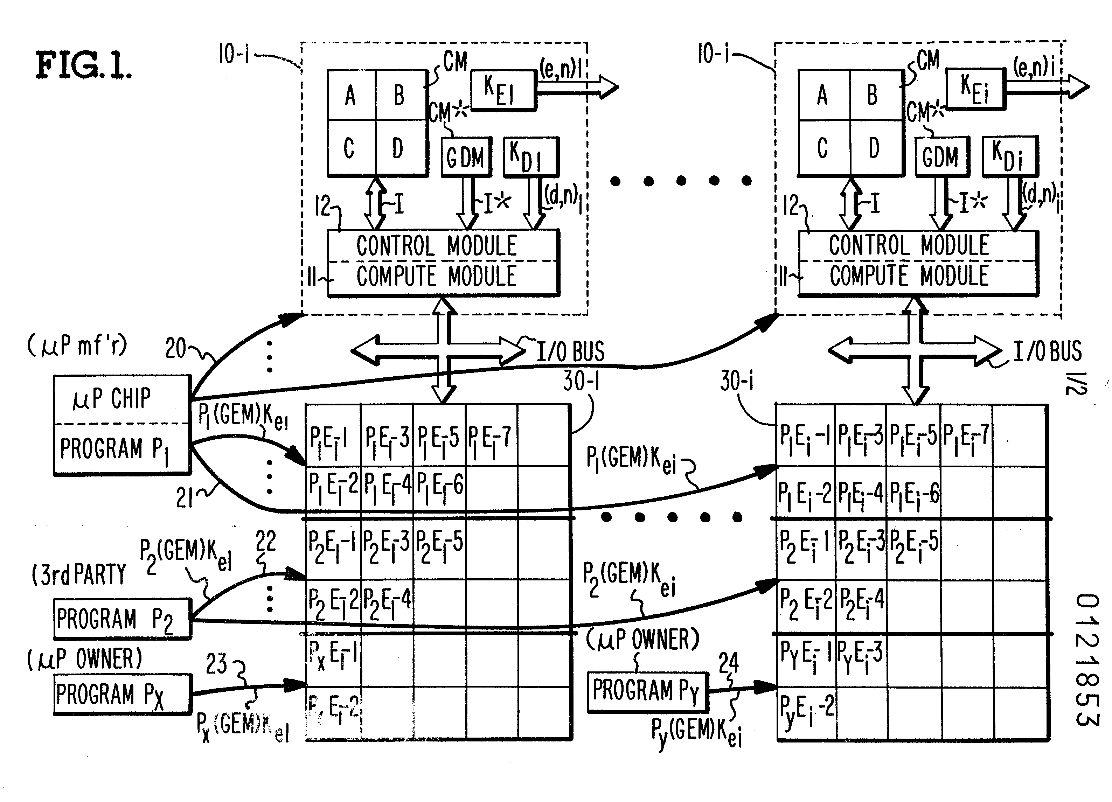

One preferred embodiment of the invention is illustrated in Figure 1. This embodiment includes a plurality of microprocessors 10-1 through 10-i. Each of the microprocessors 10-1 through 10-i respectively includes a unique and publicly accessible encryption key $K_{E1}$ through $K_{Ei}$. Key $K_{E1}$ is used to encrypt programs that are to be run on processor 10-1;...; and key $K_{Ei}$ is used to encrypt programs that are to be run on microprocessor 10-i.

Each of the microprocessors 10-1 through 10-i also respectively includes a unique decryption key $K_{D1}$ through $K_{Di}$. Key $K_{D1}$ is used to decrypt programs that have been encrypted via key $K_{E1}$;...; and key $K_{Di}$ is used to decrypt programs that have been encrypted via key $K_{Ei}$.

Decryption keys $K_{D1}$ through $K_{Di}$ are embedded into the respective microprocessors in a fashion which makes them humanly imperceptible. Preferably, each microprocessor is integrated on a single semiconductor chip; and the decryption key is also integrated as a part of that chip. Also, the decryption keys are of a type that are not determinable from the publicly accessible encryption keys.

Preferably, each encryption key and corresponding decryption key respectively represent a unique pair of digits $(e, n)$ and $(d, n)$. Under such conditions, an encrypted program PE equals the unencrypted program P raised to the power e modulo n; and a decrypted program equals the encrypted program raised to the power d modulo n. Mathematically, this is expressed as: $PE = P^e \bmod n$, and $P = PE^d \bmod n$.

A particular value for n is obtained by randomly choosing two large prime numbers p and q; and setting n equal to the product p X q. Thereafter, a particular value for d is obtained by computing the product (p-1)X(q-1); and choosing d such that the greatest common denominator between d and the product (p-1)X(q-1) is 1. Finally, a particular value for e is obtained by choosing e such that the product e X d is equal to 1 modulo (p-1)X(q-1).

Each of the microprocessors 10-1 through 10-i further includes a first control memory CM*, a second control memory CM, a compute module 11, and a control module 12. Module 11 performs mathematical operations in response to externally supplied instructions; control memory CM* stores instructions that direct module 11 to decrypt encrypted programs via the microprocessor's encryption key; control memory CM stores the decrypted programs from module 11; and control module 12 supplies instructions to module 11 from control memories CM* and CM during respective time intervals that are sequentially interleaved.

One feature of the above-described data processing system is that various programs can be written for any microprocessor 10-1 through 10-i by the microprocessor manufacturer, the microprocessor buyer, and a third party software vendor; and at the same time, the risk of software piracy is eliminated. This is evident from the following description of the bottom portion of Figure 1.

In Figure 1, reference numeral 20 indicates the distribution of the microprocessors 10-1 through 10-i from the microprocessor manufacturer to the microprocessor owners. Also, reference numeral 21 indicates the distribution of one program $P_1$ from the microprocessor manufacturer to the microprocessor owners. Reference numeral 22 indicates the distribution of another program $P_2$ from a third party software manufacturer to the microprocessor owners. And reference numerals 23 and 24 respectively indicate the distribution of other programs $P_X$ and $P_Y$ from the microprocessor owners themselves.

Before program $P_1$ is distributed to the owner of microprocessor 10-1, the microprocessor manufacturer reads the unique but public encryption key $K_{E1}$ of microprocessor 1 and encrypts program $P_1$ via a generalized encryption method (GEM) which uses the unique encryption key. For example, the GEM can constitute raising the unencrypted program to the power e modulo n, with specific numerical values of e and n being specified by the unique encryption key.

Thereafter, the encrypted program, which is indicated in Figure 1 as $P_1[GEM]K_{E1}$, is sent to the owner of microprocessor 10-1 where it is stored in a memory 30. From memory 30, program $P_1[GEM]K_{E1}$ can be accessed by microprocessor 10-1 over an input/output (I/O) bus.

Similarly, before program $P_1$ is distributed to the owner of microprocessor 10-i, the microprocessor manufacturer reads the unique and public encryption key $K_{Ei}$ and encrypts program $P_1$ via the general encryption method and unique encryption key. The resulting encrypted program, which is indicated in Figure 1 as $P_1[GEM]K_{Ei}$, is sent to the owner of microprocessor 10-i where it is stored in a memory 30-i and accessed by microprocessor 10-i over an I/O bus.

If one of the encrypted programs $P_1[GEM]K_{E1}$ through $P_1[GEM]K_{Ei}$ is intercepted during its distribution by a software pirate, such an event poses no problem since an encrypted program will run only on the particular microprocessor for which the program was intended.

Further, the original unencrypted program $P_1$ cannot be obtained from the encrypted program without the decryption key; and that decryption key is embedded in the microprocessor in a humanly imperceptible fashion and is not determinable from the publicly accessible encryption key.

In addition, since the unencrypted version of program $P_1$ is never available to the microprocessor owner but is always kept within the microprocessor, program $P_1$ is also protected from piracy by the microprocessor owner.

Distribution of program $P_2$ from a third party software vendor proceeds in a similar fashion. Before program $P_2$ is distributed to the owner of microprocessor 10-1, then the vendor of program $P_2$ obtains the unique and public encryption key $K_{E1}$ and uses it in conjunction with the general encryption method to encrypt program $P_2$. Thereafter, the resulting encrypted program $P_2[GEM]K_{E1}$ is sent to the owner of microprocessor 10-1.

In like manner, program $P_2$ is encrypted via the general encryption method and unique encryption key $K_{Ei}$ prior to sending that program to the owner of microprocessor 10-i. Consequently, nobody except the third party vendor of program $P_2$ has access to an unencrypted copy of that program.

Finally, if the owner of a microprocessor wishes to write a program that will run on his own microprocessor, he can do so by encrypting such program with the general encryption method and his own unique encryption key. For example, reference numeral 23 indicates a program $P_X$ written by the owner of microprocessor 10-1 that has been encrypted via the general encryption method and key $K_{E1}$; and reference numeral 24 shows another program $P_Y$ written by the owner of microprocessor 10-i that has been encrypted via the general encryption method and unique encryption key $K_{Ei}$.

Preferably, memories 30-1 through 30-i which store the encrypted programs are substantially larger than control memory CM which stores the decrypted programs. For example, memories 30-1 through 30-i may include a magnetic tape or magnetic disk having a storage capacity of several million bytes; whereas control memory CM preferably is a semiconductor memory which occupies only a portion of a single semiconductor chip on which the microprocessor is integrated.

Also preferably, the various programs $P_1$, $P_2$, $P_X$, and $P_Y$ are partitioned into blocks prior to their encryption; and each block is separately encrypted. For example, in Figure 1, program $P_1$ is illustrated in memory 30-1 as being partitioned into seven encrypted blocks which are indicated as $P_1E_1$-1 through $P_1E_1$-7. Similarly, program $P_2$ is illustrated as being partitioned into five encrypted blocks $P_2E_1$-1 through $P_2E_1$-5; and program $P_X$ is illustrated as being partitioned into two encrypted blocks $P_XE_1$-1 and $P_XE_1$-2.

To partition a program into blocks, that program along with the variable "n" in the public encryption key should be expressed in binary form. Then the number of bits in each program block must be made less than the number of bits in "n".

With the above program partitioning, control memory CM operates as a cache which stores only a predetermined number of the unencrypted program blocks. Suitably, each program block contains 256 bits; and control memory CM has a capacity to store four such blocks. A larger number of bits per block can be used to improve the degree of security; and a larger storage capacity in control memory CM can be used to improve the cache hit-miss ratio and thereby improve the speed at which the programs are executed.

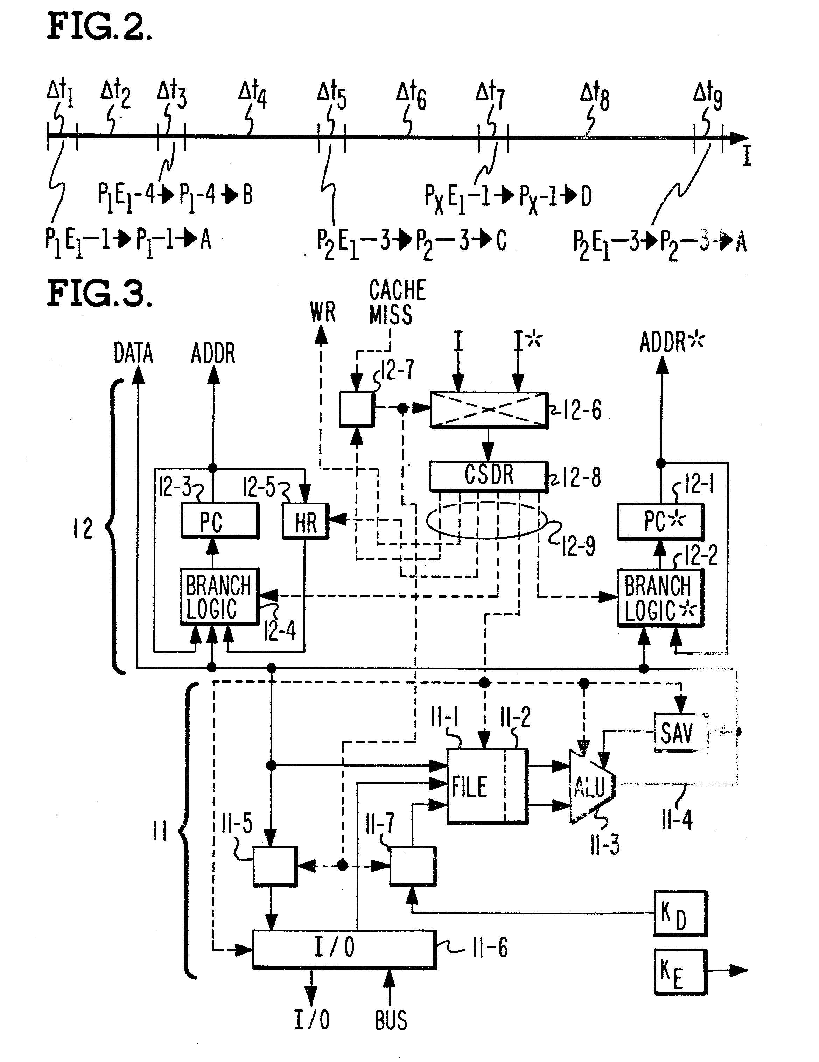

Figure 2 illustrates an example of the sequential fashion in which the various program portions are read from memory 30-1, decrypted within microprocessor 30-1, and executed within the microprocessor. In this example, time is plotted on a horizontal axis which is divided into a plurality of sequential time intervals $\Delta t_1$, $\Delta t_2, \ldots$, etc. During each odd-numbered time interval, a particular program portion is read from memory 30-1, decrypted within microprocessor 10-1 and stored in memory CM; whereas during each even-numbered time interval, the decrypted program portions in control memory CM are executed within the microprocessor.

In the example, during time interval $\Delta t_1$, microprocessor 10-1 reads the first module of encrypted program $P_1$ from memory 30-1. That program module is then decrypted by compute module 11 in response to commands in control memory CM* together with the unique decryption key $K_{D1}$. This resulting decrypted program module, which is indicated in Figure 2 as $P_1$-1, is then stored in section A of control memory CM.

Thereafter, during time interval $\Delta t_2$, control module 12 fetches the decrypted instructions in section A of control memory CM and directs them to compute module 11. That process continues until a branch is taken to an instruction which lies outside of program 1 module 1. Such a branch initiates the next time interval $\Delta t_3$.

During time interval $\Delta t_3$, the encrypted program module which was branched into is read and decrypted by microprocessor 10-1, and the resulting decrypted program module is stored in section B of control memory CM. In the illustrated example, module 4 of program $P_1$ is decrypted and stored in section B of control memory CM. Again, this decryption occurs in compute module 11 under the direction of commands in control memory CM* and the decryption key $K_{D1}$.

Subsequently, during time interval $\Delta t_4$, control module 12 directs the decrypted instructions in sections A and B of control memory CM to the compute module. That process then continues until another branch is taken to another program module. Such a branch initiates the next time interval $\Delta t_5$.

The above process of decrypting program modules as they are branched to continues during time intervals $\Delta t_5$, $\Delta t_7$, $\Delta t_9$, etc. As an example, Figure 2 shows the third module of program $P_2$ being decrypted during time interval $\Delta t_5$, the first module of program $P_X$ being decrypted during time interval $\Delta t_7$, and the third module of program $P_2$ being decrypted during time interval $\Delta t_9$. Then, during the other time intervals $\Delta t_6$, $\Delta t_8$, etc., the decrypted code is executed.

After the four sections of control memory CM are filled up, each newly decrypted code module is written into control memory CM over the least recently decrypted code module. For example, during time interval $\Delta t_9$, the third module of program 2 is written into section A of control

0121853

memory CM because that section of the control memory had not been written into since time interval $\Delta t_1$.

One preferred embodiment for control module 12 and compute module 11 which perform the above-described operations is illustrated in Figure 3. This embodiment includes a program counter 12-1 which addresses instructions in control memory CM* during the odd-numbered time intervals. Addresses in program counter 12-1 are formed by a branch logic module 12-2; and they are indicated in Figure 3 as ADDR*.

Also included in control module 12 is another program counter 12-3 which addresses instructions in control memory CM during the even-numbered time intervals. Addresses in program counter 12-3 are formed by a branch logic module 12-4; and they are indicated in Figure 3 as ADDR.

Addresses ADDR are also coupled to a holding register 12-5. At the end of each even-numbered time interval, the address in program counter 12-3 is stored in holding register 12-5. Thereafter, during the odd-numbered time interval, program counter 12-5 addresses the section of control memory CM where the newly decrypted instructions are to be stored. Then at the start of the next even-numbered time interval, the address in holding register 12-5 is transferred back to program counter 12-5.

Instructions from control memory CM* are indicated in Figure 3 as I*; and instructions from control memory CM are indicated as I. Instructions I and I* are received by a 2 X 1 multiplexor 12-6; and a control circuit 12-7 directs multiplexor 12-6 to pass either the instructions I or the instructions I* to a control store data register 12-8. Each instruction in control store data register 12-8 generates control signals on a plurality of conductors 12-9 which direct the operation of both control module 12 and compute module 11.

Compute module 11 includes a register file which is divided into two parts 11-1 and 11-2. File 11-1 is accessible only by instructions in control memory CM; whereas register file 11-2 is accessible only by instructions in control memory CM*.

Module 11 also includes an arithmetic logic unit 11-3. That unit receives data from a pair of registers in the register files as selected by control signals on the conductors 12-9, performs arithmetic operations on those operands in response to the control signals on conductors 12-9, and generates the results on a bus 11-4.

Bus 11-4 couples back to register files 11-1 and 11-2. It also couples to the branch logic modules 12-2 and 12-4 so that the arithmetic results can be tested by conditional branch instructions. It also couples to control memory CM as a data input which can be written into the control memory. And it also passes through a set of AND gates 11-5 to an input/output (I/O) module 11-6.

In response to the control signals on conductors 12-9, I/O module 11-6 sends data to and receives data from the previously described I/O bus. In particular, during the odd-numbered time intervals, module 11-6 receives encrypted program modules from memory 30-1. Those encrypted program modules are then sent to register file 11-2 whereupon they are decrypted.

During the decryption process, program counter 12-1 and branch logic 12-2 address the instructions I* in control memory CM*; those instructions I* are passed through multiplexor 12-6 to control store register 12-8; and the instructions I* in register 12-8 generate control signals on conductors 12-9 which direct arithmetic logic unit 11-3 to raise the encrypted instructions in register file 11-2 to the power d modulo n.

The arithmetic result of that operation equals the decrypted program module. Thus, that result is sent via bus 11-4 to control memory CM where it is stored in response to a write signal (WR) on the conductors 12-9. A listing of one suitable set of the instructions I* for storage in memory CM* to perform the above decrypting and storage operation is attached hereto as Appendix 1. Also, additional details on the underlying mathematics of the encryption-decryption method itself are described in a paper entitled, "A Method for Obtaining Digital Signatures on Public-Key Cryptosystems" by Rivest et al, April 4, 1977.

Throughout the decrypting operation, the same control signal from logic circuit 12-7 which selects the instructions I* is sent to a set of AND gates 11-7 which in response permits the transfer of decryption key $K_D$ to file registers 11-2. At the same time, that control signal is also sent to AND gates 11-5 which in response prohibits the transfer of signals on bus 11-4 to the I/O module. Consequently, during the only time intervals that the decryption key is being read and decrypted instructions are being sent to control memory CM, that decryption key and decrypted instructions are inaccessible to the outside world via the I/O bus.

After the above-described decryption process is complete and the decrypted instructions have been stored in control memory CM, multiplexor 12-6 passes the decrypted instructions I from control memory CM to register 12-8. These instructions I are addressed under the control of program counter 12-3 and branch logic 12-4. This state of operation defines the even-numbered time intervals.

Decrypted program modules in control memory CM are executed until a branch is taken to an instruction in a program module which is not in control memory CM. When that occurs, a "CACHE MISS" signal is generated by control memory

0121853

-14-

CM. In response thereto, control circuit 12-7 returns to its previous state in which instructions I* from control memory I* are passed through multiplexor 12-6 to control store data register 12-8. Thereafter, another block of encrypted code is decrypted according to the above-described process.

One preferred embodiment of the invention has now been described in detail. In addition, however, many modifications and changes can be made to those details without departing from the nature and spirit of the invention. Accordingly, it is to be understood that the invention is not limited to said detailed embodiment but is defined by the appended claims.

APPENDIX 1:   Computer Instructions for Encrypting and Decrypting

The following code demonstrates  the operation of raising  a
string of computer instructions, which  may be represented as  an
array of integers, to a power modulo a modulus.  This may be used
for both the encryption and decryption operations.

The example is  presented in the  computer language  Pascal.
It is assumed that the following procedures have previously  been
provided:
MultiplyModulo - Multiplies two large numbers, returning the
resulting product modulo a modulus.
BitIsOn - A large number, represented as succession of bits,
is supplied  to this  procedure.  The least  significant bit  is
referred to  as  bit  zero,  with  more  significant  bits  being
numbered one, two, etcetera.  The procedure is also supplied with
the number  of a  bit to  examine.  The procedure  examines  the
indicated bit in the large number.  It returns a Boolean (True or
False) value of True  if and only if  the examined bit has  value
one.

```
TYPE LargeNumber = PACKED ARRAY[0..NumberSize] OF INTEGER;

PROCEDURE ExponentiateModulo
    (Message, Exponent, Modulus : LargeNumber;
                        VAR Result : LargeNumber );
VAR I : INTEGER;

BEGIN
    FOR I:=0 TO NumberSize-1 DO Result[I]:=0;
    Result[NumberSize]:=1;
    FOR I:=NumberSize*BitsPerINTEGER TO 0 STEP -1 DO
    BEGIN
        MultiplyModulo(Result, Result, Modulus, Result);
        IF BitIsOn(Exponent, I)
        THEN MultiplyModulo(Message, Result, Modulus, Result)
    END
END;
```

WHAT IS CLAIMED IS:

1. A data processing system that provides for the public encryption of software programs while simultaneously protecting against the public decryption and piracy of said programs, comprised of:

a plurality of microprocessors;

each microprocessor of said plurality having a unique and publicly accessible encryption key means for encrypting said software programs in a unique fashion for each particular microprocessor;

each microprocessor of said plurality further having a unique decryption key means for decrypting said software programs that have been encrypted with the microprocessor's unique encryption key;

said decryption key means in each microprocessor being imbedded therein in a fashion which makes the decryption key humanly imperceptible, and being of a type that is not determinable from said publicly accessible encryption key means.

2. A system according to Claim 1 wherein each microprocessor of said plurality includes an arithmetic means for performing mathematical operations in response to externally supplied instructions, a first memory means for storing instructions that direct said arithmetic means to decrypt said encrypted programs via said decryption key, a second memory means for storing decrypted programs from said arithmetic means, and control means for supplying instructions from said first and second memory means to said arithmetic means respectively during first and second interleaved time intervals.

3. A system according to Claim 2 wherein said control means further includes means for permitting said decryption key means to be read within said microprocessor during only said first time intervals while simultaneously prohibiting transfers of said decryption key means and decrypted programs from said microprocessor.

4. A system according to Claim 2 wherein said control means further includes a first program counter means for addressing said first memory means during said first time intervals, and a second program counter means for addressing said second memory means during both said first and second time intervals.

5.      A system according to Claim 2 wherein each microprocessor of said plurality is integrated on a respective semiconductor chip, and said decryption key means is imbedded therein as a plurality of electrically programmable fuses.

6.      A system according to Claim 2 wherein said encryption key means and said decryption key means for each microprocessor of said plurality respectively represent a unique pair of digits (e, n) and (d, n), said encrypted programs are unencrypted programs raised to the power e modulo n, and said instructions in said first memory means direct said arithmetic means to decrypt programs by raising said encrypted programs to the power d modulo n.

0121853

7.      For use in a data processing system that provides for the public encryption of a software program while simultaneously protecting against the public decryption and software piracy of said program, a microprocessor comprised of:

an encryption key means that is unique to said microprocessor and is publicly accessible;

means for receiving said program after it has been encrypted via said publicly accessible encryption key means;

a decryption key means that is unique to said microprocessor, is integrated into said microprocessor in a fashion which makes it humanly imperceptible, and is not determinable from said publicly accessible encryption key means; and

means for decrypting the received program within said microprocessor via said decryption key means.

8.      A microprocessor according to Claim 7 wherein said means for decrypting includes an arithmetic means for performing mathematical operations in response to externally supplied instructions, a first memory means for storing instructions that direct said arithmetic means to decrypt said encrypted program via said decryption key, a second memory means for storing decrypted programs from said arithmetic means, and control means for supplying instructions from said first and second memory means to said arithmetic means respectively during first and second interleaved time intervals.

9.      A microprocessor according to Claim 7 wherein said means for decrypting includes means for reading said decryption key within said microprocessor during only predetermined time intervals while simultaneously prohibiting transfers of said decryption key means and decrypted program from said microprocessor.

10.      A microprocessor according to Claim 7 wherein said microprocessor is integrated on a single semiconductor chip, and said decryption key is imbedded therein as a plurality of electrically programmable fuses.

11.      A microprocessor according to Claim 7 wherein said encryption key means and said decryption key means respectively represent a unique pair of digits (e, n) and (d, n), said encrypted program is an unencrypted program raised to the power e modulo n, and said means for decrypting raises said encrypted program to the power d modulo n.

12.     A method of encrypting and decrypting a software program including the steps of:

integrating a unique and non-public decryption key into a data processor in a fashion which makes said decryption key humanly imperceptible;

encrypting said program via a public encryption procedure which uses a public encryption key that is unique to said data processor;

receiving said encrypted program in said data processor; and

decrypting said received program in said data processor using a public decryption procedure together with said non-public decryption key.

FIG.1.

# FIG.2.

$\Delta t_1$   $\Delta t_2$   $\Delta t_3$   $\Delta t_4$   $\Delta t_5$   $\Delta t_6$   $\Delta t_7$   $\Delta t_8$   $\Delta t_9$

I

$P_1 E_1 - 4 \rightarrow P_1 - 4 \rightarrow B$

$P_X E_1 - 1 \rightarrow P_X - 1 \rightarrow D$

$P_1 E_1 - 1 \rightarrow P_1 - 1 \rightarrow A$

$P_2 E_1 - 3 \rightarrow P_2 - 3 \rightarrow C$

$P_2 E_1 - 3 \rightarrow P_2 - 3 \rightarrow A$

# FIG.3.